Europäisches Patentamt

European Patent Office

Office européen des brevets

(19)

(11) Veröffentlichungsnummer : **0 079 519**
**B1**

(12) # EUROPÄISCHE PATENTSCHRIFT

(45) Veröffentlichungstag der Patentschrift :
17.07.85

(21) Anmeldenummer : 82110110.2

(22) Anmeldetag : 03.11.82

(51) Int. Cl.⁴ : **C 09 J 7/02, C 08 L 23/02**

(54) **Klebeband.**

(30) Priorität : 12.11.81 DE 3144911

(43) Veröffentlichungstag der Anmeldung :
25.05.83 Patentblatt 83/21

(45) Bekanntmachung des Hinweises auf die Patenterteilung : 17.07.85 Patentblatt 85/29

(84) Benannte Vertragsstaaten :
BE DE FR GB IT LU NL

(56) Entgegenhaltungen :
DE-A- 1 941 170
DE-A- 2 428 462
FR-A- 2 223 442
FR-A- 2 258 440
FR-A- 2 374 358

(73) Patentinhaber : HOECHST AKTIENGESELLSCHAFT
Postfach 80 03 20
D-6230 Frankfurt am Main 80 (DE)

(72) Erfinder : Crass, Günter
Bachstrasse 7
D-6204 Taunusstein 4 (DE)
Erfinder : Hensel, Hartmut, Dr.
Am Roten Berg 2
D-6229 Schlangenbad 3 (DE)
Erfinder : Hammerschmidt, Peter
Münzenbergstrasse 20
D-6200 WI-Medenbach (DE)

**Beschreibung**

Die vorliegende Erfindung betrifft ein Klebeband mit einer Polyolefinträgerschicht und einer wenigstens einseitig darauf ohne Haftvermittler aufgebrachten Kleberschicht.

Ein- oder beidseitig beschichtete Klebebänder sind seit langer Zeit bekannt. Die ersten Bänder besaßen eine Trägerschicht aus Cellulosehydrat. Diese Bänder sind jedoch sehr empfindlich gegenüber Feuchtigkeitsschwankungen. Bei niedrigeren Feuchtigkeitswerten werden die Bänder spröde und reißen zu leicht, während bei höheren Feuchtigkeitswerten die Rollen teleskopieren und das Klebeband schwer abzureißen ist. Außerdem greifen die relativ aggressiven Kleber die Trägerfolie an.

Aufgrund dieser Nachteile hat man in der Folgezeit versucht, die Cellulosehydratträgerfolie durch Polymerfolien zu ersetzen. Es stellte sich dabei heraus, daß z. B. Klebebänder mit einer Trägerfolie aus Polyethylenterephthalat zu schwer abzureißen waren, während Bänder auf der Basis von Celluloseacetat zu leicht reißen. Bänder auf der Basis von orientiertem Polystyrol sind zu spröde und haben außerdem eine geringe Lösungsmittelbeständigkeit. Bänder mit Trägerfolien aus Polyethylen, Vinylidenchloridcopolymeren oder weichgemachtem PVC besitzen geringe mechanische Festigkeit und sind weiterhin schwer abzureißen.

Diese Tatbestände sind sehr anschaulich in der US-PS 3 089 786 geschildert, die es sich zum Ziel gesetzt hat, ein Klebeband auf der Basis von PVC zu schaffen, das die Nachteile der bis dahin bekannten Bänder nicht aufwies. Es ist jedoch auch weiterhin bekannt, daß die auf Basis von PVC hergestellten Bänder leicht zum Aufsplittern bei stoßartiger Querbelastung und zum Ausreißen in Längsrichtung neigen.

Man hat deshalb versucht, die PVC-Trägerfolien durch andere Polymerträgerfolien zu ersetzen, zumal man den Bändern auf PVC-Basis Umweltprobleme bei deren Vernichtung durch Verbrennen anlasten könnte.

Aus der DE-AS 2 501 600 ist ein Klebeband bekannt, das eine Polyolefinträgerfolie aufweist. Um dem Spleißen der Folie zu begegnen, ist dieser ein thermoplastisches Elastomeres, vorzugsweise im Bereich unterhalb von 30 Gewichtsteilen, bezogen auf 100 Gewichtsteile an Polyolefin, als Weichmacher zugesetzt. Die Polyolefinfolie kann dabei auch einachsig in Längsrichtung gereckt sein. Nachteilig bei allen angegebenen Trägerfolien ist jedoch — mit Ausnahme von Cellulosehydrat — deren Hydrophobie, so daß erst ein Haftvermittler aufgebracht werden muß, um die Klebstoffschicht derart gut zu verankern, daß sie sich nicht von der Trägerfolie beim Abziehen von der Rolle löst.

Das Aufbringen einer haftvermittelnden Schicht ist jedoch ein zusätzlicher und kostenaufwendiger Schritt, der oftmals auch zu Beschichtungsfehlern führt.

Es stellte sich somit die Aufgabe, ein Klebeband zu entwickeln, das keine haftvermittelnde Schicht benötigt und bei dem der Klebstoff trotzdem gut an der Trägerfolie haftet, um sich beim Abrollen nicht abzuziehen. Weiterhin soll das Klebeband leicht abreißen, gut dimensionsstabil sein und einen hohen Elastizitätsmodul aufweisen.

Gelöst wird die vorstehend genannte Aufgabe durch ein Klebeband der eingangs genannten Gattung, dessen kennzeichnende Merkmale darin zu sehen sind, daß die Trägerfolie aus einer biaxial orientierten Folie aus Polypropylen, einem Block- oder statistischen Copolymeren des Propylens mit wenigstens 5 % Copolymeranteil oder einer Mischung des Polypropylens mit wenigstens 5 % eines anderen $\alpha$-Olefins mit $C_n$ Kohlenstoffatomen, wobei n eine Zahl von 2 und 4 bis 10 bedeutet, oder einer Mischung aus Polypropylen und einem Copolymeren besteht, die 5 bis 30 Gewichtsprozent wenigstens eines natürlichen oder synthetischen Harzes mit einem Erweichungspunkt von 70 bis 170 °C enthält. Die harzmodifizierten Polyolefine bzw. daraus hergestellten Folien sind an sich z. B. aus den DE-ASn 2 146 393 und 2 428 462, der DE-PS 1 941 170 und der DE-OS 2 755 446 bekannt. Dort werden die Harzzusätze jedoch entweder dazu benötigt, die Siegelfähigkeit zu verbessern oder den Schlupf zu erhöhen.

Es war deshalb besonders überraschend, daß die harzmodifizierten Polyolefinfolien sich ohne Verwendung einer haftvermittelnden Schicht mit dem Kleber verbinden ließen. ohne daß es zu einer Ablösung des Klebstoffes beim Abziehen von der Rolle kam.

Dies war umso überraschender, da dies bei Verwendung von nicht-modifizierten Polyolefinfolien nicht der Fall war, sondern diese auf jeden Fall einen Primer als Haftvermittler benötigten.

Die eingesetzten « harten » Harze können sowohl natürlicher als auch synthetischer Art sein, wobei auch Mischungen zwischen diesen zur Optimierung der Klebstoffhaftung nicht ausgeschlossen sind. Die Harze sollen Erweichungspunkte zwischen 70 und 170 °C, bevorzugt zwischen 80 und 140 °C aufweisen.

Die in der Trägerfolie enthaltenen « harten » Harze sind bevorzugt ein nicht-hydriertes Styrolpolymerisat, ein Methylstyrol-Styrol-Copolymerisat, ein Pentadien-Polymerisat, ein $\alpha$- oder $\beta$-Pinen-Polymerisat, Kolophonium oder Kolophoniumderivat oder besonders bevorzugt Terpenpolymerisate sowie hydrierten Verbindungen hiervon sowie ein hydriertes $\alpha$-Methylstyrol-Vinyltoluol-Copolymerisat.

Von diesen Verbindungen können gegebenenfalls Mischungen von mehreren Harzen eingesetzt werden.

Wenn auch die Stärke der Trägerfolie an sich nicht begrenzt ist, so haben sich in der Praxis Stärken von 15 bis 60 $\mu$m, insbesondere von 20 bis 50 $\mu$m, besonders bewährt.

Die Trägerfolie kann als Monofolie ausgebildet sein, jedoch auch mehrschichtig aufgebaut sein. In diesem Fall ist bevorzugt, daß nur die mit dem Kleber verbundene(n) Schicht(en) harzmodifiziert ist (sind), da lediglich dünne Schichten vorhanden sein müssen, um eine gute Kleberhaftung zu erzielen.

Es ist zweckmäßig, auch den Kleber mit 10 bis 50 % Harz zu modifizieren, wobei insbesondere auch die bevorzugt genannten Harze Verwendung finden. Bevorzugte Kleberrezepturen enthalten :

50 bis 90 % Naturkautschuk
10 bis 50 % Harz
und zusätzlich geringen Mengen Alterungsmittel.

Die Erfindung wird anhand der folgenden Beispiele nochmals näher erläutert, ohne daß jedoch eine Einschränkung hierauf bestehen soll.

Beispiel 1

Es wurde ein Polypropylenhomopolymerisat (Hostalen[(R)] PPN 1 060 der HOECHST AG) bei 260 °C schmelzextrudiert und auf einer Gießwalze von 30 °C zu einer Vorfolie verfestigt. Anschließend wurde die Vorfolie bei 135 °C um das 6-fache längsgestreckt und daraufhin bei 165 °C um das 8,5-fache in Querrichtung gestreckt.

Die biaxial gestreckte Folie wurde bei 155 °C thermofixiert.

Mit einem üblichen Antragswerk wurde die 30 μm dicke Folie mit einem Kautschukkleber beschichtet.

Die durchgeführten Tests zeigten, daß die Kleberschicht beim Abziehen von der Rolle unkontrolliert von der Vorderseite auf die Rückseite wechselt.

Beispiel 2

Es wurde wie in Beispiel 1 gearbeitet, nur daß dem Polypropylenhomopolymerisat 5 Gewichtsprozent eines synthetischen Polyterpenharzes (Arkon P 125 der Fa. ARAKAWA) vor der Extrusion zugemischt wurden. Es zeigte sich, daß sich die Rollen überwiegend ohne Kleberabrisse abrollen ließen, jedoch noch einzelne Abrisse feststellbar waren.

Beispiel 3

Es wurde gemäß Beispiel 2 gearbeitet, jedoch wurden diesmal 10 Gewichtsprozent des Harzes zugesetzt.

Die Klebebandrollen ließen sich auch bei unterschiedlichen Abzugsgeschwindigkeiten gut abrollen, ohne daß es zu Abrissen der Kleberschicht kam.

Beispiel 4

Beispiel 3 wurde wiederholt, jedoch mit einem Harzzusatz von 20 Gewichtsprozent. Es ergaben sich dieselben Ergebnisse hinsichtlich der Abrollung. Zusätzlich zeigte das Klebeband eine deutliche bessere Steifigkeit.

**Patentansprüche**

1. Klebeband mit einer Polyolefinträgerfolie und einer wenigstens einseitig aufgebrachten Kleberschicht, dadurch gekennzeichnet, daß die Trägerfolie aus einer biaxial orientierten Folie aus Polypropylen, einem Block- oder statistischen Copolymeren des Propylens mit wenigstens 5 % Copolymeranteil oder einer Mischung des Polypropylens mit wenigstens 5 % eines anderen α-Olefins mit $C_n$ Kohlenstoffatomen, wobei n eine Zahl von 2 und 4 bis 10 bedeutet, oder einer Mischung aus Polypropylen und einem Copolymeren besteht, die 5 bis 30 Gewichtsprozent wenigstens eines natürlichen oder synthetischen Harzes mit einem Erweichungspunkt von 70 bis 170 °C enthält.

2. Klebeband nach Anspruch 1, dadurch gekennzeichnet, daß das in der Trägerfolie enthaltene Harz einen Erweichungspunkt von 80 bis 140 °C aufweist.

3. Klebeband nach einem der Ansprüche 1 oder 2, dadurch gekennzeichnet, daß das Harz in der Trägerfolie aus einem nicht-hydrierten Styrol-Polymerisat, aus einem α-Methyl-styrol-Styrol-Copolymerisat, aus einem Pentadienpolymerisat, α-Pinen- oder β-Pinen-Polymerisaten, aus Terpenpolymerisaten, Kolophonium bzw. Kolophoniumderivaten oder hydrierten Verbindungen hiervon oder aus einem hydrierten α-Methylstyrol-Vinyltoluol-Copolymerisat, gegebenenfalls in Mischung besteht.

4. Klebeband nach einem der Ansprüche 1 bis 3, dadurch gekennzeichnet, daß die Stärke der Polyolefinträgerfolie 15 bis 60 μm beträgt.

5. Klebeband nach einem der Ansprüche 1 bis 4, dadurch gekennzeichnet, daß die Polyolefinträgerfolie mehrschichtig aufgebaut ist, wobei nur die mit dem Kleber verbundene(n) Schicht(en) harzmodifiziert ist (sind).

6. Klebeband nach einem der Ansprüche 1 bis 5, dadurch gekennzeichnet, daß der Kleber ebenfalls 10 % bis 50 % Harz enthält.

7. Klebeband nach wenigstens einem der Ansprüche 1 bis 6, dadurch gekennzeichnet, daß die Klebstoffschicht aus Naturkautschuk und den im Anspruch 3 genannten Harzen besteht.

**Claims**

1. Adhesive tape with a polyolefin support film and an adhesive layer applied to at least one of its surfaces, wherein the support film is comprised of a biaxially oriented film made of polypropylene ; a block copolymer or random copolymer of propylene with a copolymer proportion of at least 5 % ; or a mixture of polypropylene with at least 5 % of another α-olefin having $C_n$

carbon atoms, n denoting a number of 2 and 4 to 10 ; or a mixture of polypropylene and a copolymer, which contains 5 to 30 % by weight of at least one natural or synthetic resin having a softening point of 70 to 170 °C.

2. Adhesive tape as claimed in claim 1, wherein the resin contained in the support film has a softening point of 80 to 140 °C.

3. Adhesive tape as claimed in claim 1 or 2, wherein the resin contained in the support film is comprised of a non-hydrogenated styrene polymer, an α-methyl-styrene/styrene copolymer, a pentadiene polymer, α-pinene or β-pinene polymers, terpolymers, colophony or colophony derivatives or hydrogenated compounds thereof, or of a hydrogenated α-methyl-styrene/vinyl toluene copolymer, optionally present in a mixture.

4. Adhesive tape as claimed in any of claims 1 to 3, wherein the polyolefin support film has a thickness of 15 μm to 60 μm.

5. Adhesive tape as claimed in any of claims 1 to 4, wherein the polyolefin support film is a multilayer film, of which only the layer(s) in contact with the adhesive are resin-modified.

6. Adhesive tape as claimed in any of claims 1 to 5, wherein the adhesive also contains 10 % to 15 % of resin.

7. Adhesive tape as claimed in at least one of claims 1 to 6, wherein the adhesive layer is comprised of natural rubber and the resins enumerated in claim 3.

**Revendications**

1. Ruban adhésif avec une feuille de support en polyoléfine et une couche de colle appliquée sur au moins l'une des faces, caractérisé en ce que la feuille de support consiste en une feuille orientée biaxialement de polypropylène, d'un copolymère séquencé ou statistique de propylène avec au moins 5 % de copolymère ou d'un mélange de polypropylène avec au moins 5 % d'une autre α-oléfine ayant $C_n$ atomes de carbone, n étant un nombre de 2 et 4 jusqu'à 10, ou d'un mélange de polypropylène et d'un copolymère, qui contient de 5 à 30 % en poids d'au moins une résine naturelle ou synthétique avec un point de ramollissement de 70 à 170 °C.

2. Ruban adhésif selon la revendication 1, caractérisé en ce que la résine contenue dans la feuille de support a un point de ramollissement de 80 à 140 °C.

3. Ruban adhésif selon l'une des revendications 1 ou 2, caractérisé en ce que la résine dans la feuille de support consiste en un polymère de styrène non-hydrogéné, un copolymère α-méthyl-styrène-styrène, un polymère de pentadiène, des polymères de α-pinène ou de β-pinène, des polymères de terpènes, de la colophane ou des dérivés de la colophane ou leurs composés hydrogénés, ou en un copolymère α-méthylstyrène-vinyltoluène hydrogéné, éventuellement en mélanges.

4. Ruban adhésif selon l'une des revendications 1 à 3, caractérisé en ce que l'épaisseur de la feuille de support en polyoléfine est de 15 à 60 μm.

5. Ruban adhésif selon l'une des revendications 1 à 4, caractérisé en ce que la feuille de support en polyoléfine est constituée de plusieurs couches, seule(s) la ou les couche(s) associée(s) à la colle étant modifiée(s) avec une résine.

6. Ruban adhésif selon l'une des revendications 1 à 5, caractérisé en ce que la colle contient également de 10 à 50 % de résine.

7. Ruban adhésif selon au moins l'une des revendications 1 à 6, caractérisé en ce que la couche de colle est composée de caoutchouc naturel et des résines énumérées dans la revendication 3.